# EUROPEAN PATENT APPLICATION

(11) **EP 0 711 507 A2**
(43) Date of publication of application: **15.05.1996**
(21) Application number: 95113899.9
(22) Date of filing: 05.09.1995
(51) Int. Cl.: A23G 9/22

(54) **Stirrer for freezing cylinders and method for the freezing of ice-cream**

(30) Priority: 09.09.1994 IT MI941843
(71) Applicant: GIANT S.r.l., I-41100 Modena (IT)
(72) Inventor: Zonari, Otello, I-40126 Bologna (IT)
(74) Representative: Marietti, Giuseppe

(57) **Abstract**

The invention relates to a stirrer for a freezing cylinder, whose stirring paddles each present along the free edge at least one part for scraping and one part for smearing the mixture being treated, respectively off and onto the refrigerated side-walls of the freezing cylinder. To improve the working conditions of the ice-cream and reduce wear on the paddles, at least some of the smearing parts have a bowed shape in a section perpendicular to the stirrer axis of rotation, with radius and/or centre of curvature different from those of the side-walls of the freezing cylinder, so as to define with the latter a wedge-shaped passage for the mixture, with a decreasing section from entrance to exit. In this way an alternating smearing and scraping of the mixture being treated, respectively off and onto the refrigerated side-walls, is carried out with a phase of progressive mechanical crushing of the mixture in the wedge-shaped space between the rotating stirring paddle and the side-wall of the freezing cylinder.

## Description

The present invention relates to a stirrer for the freezing cylinder of ice-cream machines, of a type comprising a support structure rotating coaxially inside a freezing cylinder and bearing a plurality of stirring paddles equally spaced circumferentially, each of which presents along the length of its free side at least one part so shaped to carry-out a scraping action and at least one part so shaped to carry-out a smearing action of the mixture being treated, respectively off and onto the refrigerated side-wall of the freezing cylinder.

As it is known, the liquid starting mixture used in the production of ice-cream, both on handicfraft or domestic scale, is normally pasteurized and introduced into what is known as a freezing cylinder, in the form of a cylinder whose side-walls are externally refrigerated. Inside the cylinder is housed a rotating stirrer, which rotates coaxially with the cylinder and carries a plurality of paddles to continuously distribute and remove the mixture onto and from the walls of the cylinder, causing a progressive thickening of the mixture itself which gradually changes from a liquid to an increasingly viscous paste.

It is clear that the configuration of the stirrer paddles has a great influence on the outcome of the freezing operation and, thus, on the quality of the ice-cream obtained, since the mixture must be continuously brought into contact, or better smeared, on the refrigerated side-wall of the freezing cylinder and then removed from said surface, which is then smeared with more mixture, and so on. The procedure is complicated by the tendency of a layer of frozen mixture to form along the refrigerated wall of the freezing cylinder, which layer considerably reduces the thermal efficiency of the machine in transferring the heat from the mixture and thus reduces the productivity of the machine itself.

This layer tends to grow and interfere with the action of the paddles, causing severe wear. Finally, there is also the risk of frozen flakes of this layer getting into the ice-cream and reducing the quality.

Then the part of each paddle which exercises a scraping action must remove the cooled and frozen mixture, and leave the surface free of product residues and ready to receive the next layer of mixture and/or ice-cream to cool.

There have been various proposals for stirrers which have claimed to solve in principle the problem of the scraping of the mixture, by removing the layer of frozen mixture.

Among these, mention is made of stirrers whose paddles have a special section, normally called winglets, which are pressed radially against the wall of the freezing cylinder by elastic means, which exercise a radial force on the wall of the cylinder and simultaneously compensate, by the movement of the winglets, for their wear.

This type of stirrer is covered by, for example, Italian Patent Application No.12446-A/89. However, it shows some problems, especially since the structure is relatively complex and the housing for the winglets and related springs are difficult to clean, with difficulties for the stripping and re-assembly of the parts.

A similar type of solution (in which the winglets are elastic and function as a spring) eliminates the problems of the structural complexity and the cleaning but introduces other problems since it is difficult to find at the same time the correct characteristics of thickness and elasticity of the winglets.

The European Application No.92101530.1 describes a stirrer for freezing cylinders which has oscillating scraping winglets, whose wear is compensated for by a gradual increase in the angle which they make with the freezing cylinder wall, under the pressure of the mixture material. This pressure generates the force required to act on the surface layer of the frozen mixture. However, this pressure has almost always been found insufficient to give the desired results, even when the mixture becomes quite dense, due to the relatively reduced exposed surface of the winglet and the small specific pressure the mixture can exercise.

Based on the above premise, the main object of the present invention is to provide a stirrer for freezing cylinders of ice-cream machines in which the aforementioned drawbacks of the known art are eliminated, with a simple structure easy to strip and assemble, giving in particular a high force in the scraping part of the paddle, sufficient to break the layer of frozen mixture in optimum conditions, without need of external or internal elastic means and with an action whose force is related to the consistency of the mixture and can be adjusted to a desired value by simply adjusting the geometry of the paddle.

Simultaneously, another object of the present invention is to provide a new method of freezing the ice-cream, in the course of which the phase of smearing the mixture on the wall of the freezing cylinder is more "energetic" than usual, with the mixture itself being stressed locally to produce a thinner final layer. This helps the heat exchange, ensures the rupture of any frozen mixture flakes present in the mixture and ensures the homogeneity of the latter.

These objects are achieved by the present invention which, in its first aspect, relates to a stirrer for freezing cylinders of ice-cream machines, of the type initially defined, which is characterized essentially in that at least some of the parts dedicated to the smearing action have, in a section perpendicular to the axis of rotation, a bowed shape with a radius and/or centre of curvature different from those of the side wall of the freezing cylinder, to define with the latter an essentially wedge-shaped passageway for the mixture, having a section decreasing in size from entrance to exit, in relation to the direction of movement of the mixture with respect to the rotating stirrer.

In another aspect, the present invention relates to a new method for the freezing of ice-cream in a refrigerated side-wall freezing cylinder by means of alternatively smearing and scraping the mixture being treated onto and off said side-wall, as achieved by a rotating stirrer with a plurality of paddles, characterized in that said smearing comprises a phase of progressive mechanical crushing of the mixture in a wedge-shaped space between the freezing cylinder wall and a part of a rotating stirring paddle.

The various details and characteristics of the present invention will now be described with reference to the attached drawings which are given for illustrative and not limiting purposes.

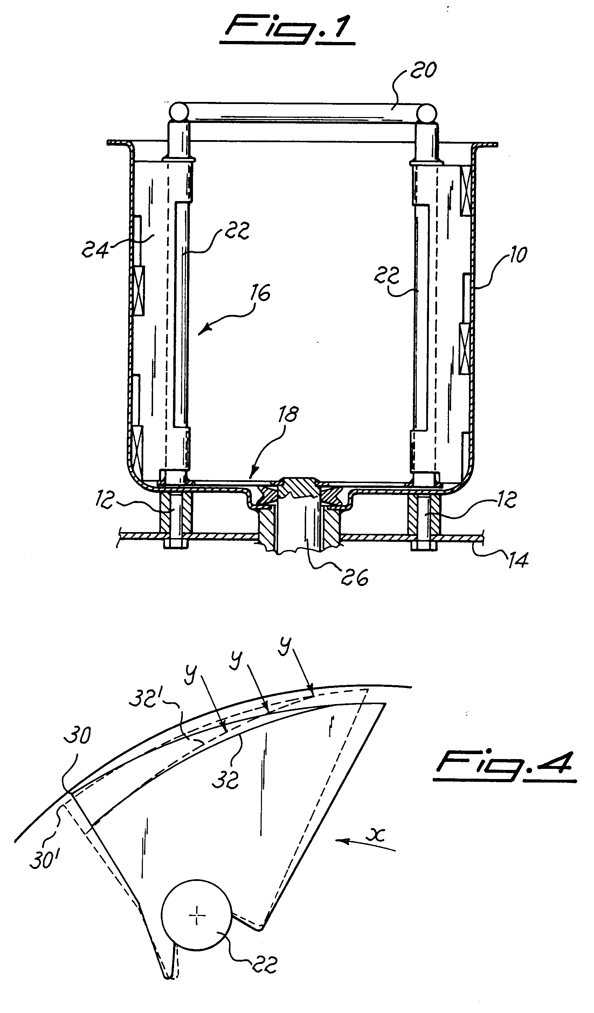

Fig.1 is an axial cross-section of an example of a freezing cylinder in which a stirrer according to the present invention is operating.

Fig.2 is a schematic side-view of the three paddles of the stirrer of fig.1, when placed in a plane.

Fig.3 is a cross-section through line III - III of fig.2 showing the shape of various sections of the paddles in a plane perpendicular to the axis of the stirrer.

Fig.4 schematically shows the method of operation of a paddle of a stirrer according to the present invention. Referring first to fig.1, the same shows an example of an upright freezing cylinder for ice cream; however, it is to be understood that the present invention is equally applicable to horizontal freezing cylinders and to the machines known as "espresso", for the production of soft ice-cream.

The freezing cylinder shown comprises a cylindrical basin or container 10, supported by pins 12 on a base 14 of the machine and in which is fitted a stirrer 16 which in the case illustrated comprises a pair of stellar supports 18 and 20 whose ends are connected and support a plurality of pivots 22, each of which bears a freely oscillating scraping/smearing paddle 24. The lower support 18 is driven by a shaft 26 in a conventional manner.

In the shown embodiment, the pivots 22 are parallel to the axis of the freezing cylinder, but they can be also provided in an inclined position, as it is known, especially in the case of a horizontal freezing cylinder.

Furthermore, as will be seen later, it is desirable that the paddles 24, and thus their related pivots 23, be three in number or multiples of three.

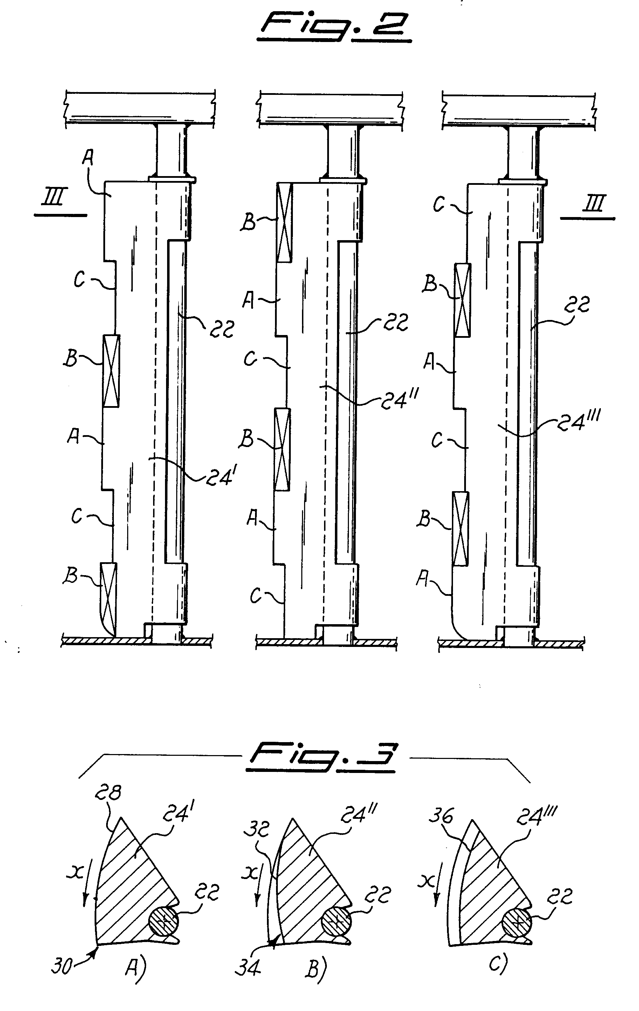

In the embodiment shown, there are three paddles 24, indicated as 24', 24'' and 24''', each of which presents, along its outer edge turned towards the side-wall of the cylinder 10, a series of zones with different configurations and operational characteristics, labelled A,B and C respectively in figs.2 and 3, the latter showing said zones in a section perpendicular to the axis of the cylinder 10. As it can be seen in fig.2, the paddle zones or parts A, B and C are located in succession along the edge of each paddle, as indicated, while said parts are shifted from each other when passing from one paddle to the next, so that the parts or zones A, for example, are distributed on the paddles in suche a manner as to remain all on a helical pattern along the internal wall of the cylinder. The same is for zones B and C, so that, when the stirrer is turned, any point of the internal surface of the cylinder 10 is passed over successively by one zone A, one zone C and one zone B, each having a precise function in the freezing of the ice-cream mixture.

Referring to fig. 3, the paddle part A presents a roughly trapezoidal shape in section, with an outer edge 28 - i.e. that facing the wall of the cylinder 10 - roughly parallel to that wall and defining a leading point 30 (considering the stirrer rotational direction X) whose function is to break and scrape the layer of frozen mixture being formed on the wall of cylinder 10. Part B of the paddle has a section shape still roughly trapezoidal, but with a side 32 which is initially - or leading (considering the direction of rotation) - far from the wall of cylinder 10, as shown in 34, but gradually approaching said wall so as to form a moving wedge into which the mixture being freezed is forced to be progressively crushed before coming out and being smeared on the walls of the cylinder in the trailing part of the wedge.

This action in the treatment of the mixture is novel and leads to the previously mentioned advantages of greater homogenization of the same mixture, together with a mechanical action on the paddle that will be examined below. Part C of the paddle, also roughly trapezoidal shaped in section, is characterized by an edge 36 parallel to and far from the wall of the cylinder 10, to carry-out a pre-smearing action on the mixture. As already mentioned, the paddle part C is involved with the mixture after the passage of the scraper part A and before the passage of the actually smearing part B.

This latter part B, together with its novel type of smearing action on the mixture in the freezing phase, exerts a mechanical effect on all the paddle, guaranteeing better performances in the breaking and scraping the frozen mixture layer as carried out by part A.

In fact, referring to fig.4, it can be seen that the action of the wedge formed by the paddle part B on the mixture involves a reaction by the mixture itself on the wedge, in the form of forces acting on the paddle, as indicated by the arrows y, which tend to rotate the paddle about its pivot 22 in a direction opposite to that of the stirrer rotation. In fig.4 the stirrer rotates in an anti-clockwise direction x, and the thrust y tends to rotate the paddle about the pivot 22 in a clock-wise direction, taking it from the position indicated by the broken line 32' to that indicated by the unbroken line 32. Taking into account that the paddle is essentially rigid, the mechanical action on the paddle parts B implies the same action on the other paddle parts, and in particular on part A, whose leading-edge 30 - for breaking and scraping the frozen mixture layer - tends to move from the position indicated by the broken line 30' to that indicated by the unbroken line 30, forcing it against the wall of the freezing cylinder with a force that depends on various factors, among which is the instantaneous density of the mixture, the size of the paddles and the related pivots 22, but that is in any case certainly greater, under similar conditions, than the force per unit area which can be exercised by a mixture forcing the winglet directly against the wall, as in the prior art.

In this way, the breaking and scraping action obtained on the frozen-mixture layer is optimal.

It is to be pointed out that the inventive principle herein outlined applies in general to whatever situation wherein a scraping action and a smearing action are required in the treatment phase of any paste mixture.

## Claims

1. Stirrer for the freezing cylinder of ice-cream machines, of the type comprising a support structure rotating coaxially inside the freezing cylinder and bearing a plurality of stirring paddles equally spaced circumferentially, each of which presents along the length of its free edge at least one part so shaped to carry-out a scraping action and at least one part so shaped to carry-out a smearing action of the mixture being treated, respectively off and onto the refrigerated side-wall of the freezing cylinder, characterized in that at least some of the parts dedicated to the smearing action have, in a section perpendicular to the axis of rotation, a bowed shape with a radius and/or centre of curvature different from those of the side wall of the freezing cylinder, to define with the latter an essentially wedge-shaped passageway for the mixture, having a section decreasing in size from entrance to exit, in relation to the direction of movement of the mixture with respect to the rotating stirrer.

2. Stirrer according to claim 1, characterized in that said paddle parts defining a wedge-shaped space circumferentially extend along the side-walls of the freezing cylinder for at least 5°.

3. Stirrer according to claim 1 or 2, of the type in which each paddle is mounted freely swingable on a related supporting pivot which is parallel and spaced from the cylinder wall, characterized in that said scraper part or parts have a scraping edge in a paddle leading part, and said paddle wedge part or parts have at least their most narrow area in the trailing part of the paddle with respect to the direction of the stirrer rotation.

4. Stirrer according to claim 3, characterized in that the reciprocal position of each paddle with respect to its own oscillation pivot is such as to obtain an approach of the paddle scraping leading edge to the wall of the freezing cylinder as a result of a rotation of the paddle about its own pivot caused by the pressure of the mixture on the paddle wedge part tending to keeep the trailing end of said wedge part away from the freezing cylinder wall.

5. Stirrer according to any of the preceding claims, characterized in that each paddle further comprises parts dedicated to smearing and defined by surfaces essentially parallel and spaced with respect to the freezing cylinder side wall.

6. Stirrer according to any of the preceding claims, characterized in that each paddle comprises, in a longitudinal succession along its own length, at least one scraping part, at least one wedge-shaped smearing part and at least one smearing part spaced from the freezing cylinder wall.

7. Stirrer according to claim 6, characterized in that the arrangement of the said scraper part, wedge-smearing part and spaced-smearing part is staggered on the various paddles in such a way that, in any section perpendicular to the stirrer axis, any point on the wall of the freezing cylinder is successively operated, during the stirrer rotation, by a scraper part, a distanced-smearing part and a wedge-smearing part, belonging to different paddles.

8. Stirrer according to claim 7, characterized in that it has three, or multiples of three, equally spaced paddles.

9. Stirrer according to any of the preceding claims, characterized in that it is free of a central shaft and shows said paddle-supporting pivots sustained by arms near the heads of the freezing cylinder .

10. Method for the freezing of ice-cream in a refrigerated side-wall freezing cylinder by means of alternatively smearing and scraping the mixture being treated onto and off said side-wall, as achieved by a rotating stirrer with a plurality of paddles, characterized in that said smearing comprises a phase of progressive mechanical crushing of the mixture in a wedge-shaped space between the freezing cylinder wall and a part of a rotating stirring paddle.

11. Method according to claim 10, characterized in that said phase of mechanical compression creates a reaction on the paddle bodye, freely swinging around a supporting pivot, in a direction opposite to that of the stirrer rotation, said reaction having a value depending on the density of the mixture being consolidated.

12. Method according to claim 11, characterized in that one or more scraping edges on the paddle edge are forced against the freezing cylinder side wall with a force depending by the reaction exercised by the mixture being compressed in said wedge-shaped space.
